(19) Europäisches Patentamt
European Patent Office
Office européen des brevets

(11) EP 2 186 858 A1

(12) EUROPEAN PATENT APPLICATION

(43) Date of publication:
**19.05.2010 Bulletin 2010/20**

(51) Int Cl.:
***C08L 53/00*** *(2006.01)*

(21) Application number: **08168843.4**

(22) Date of filing: **11.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Wageningen Universiteit**
**6701 BH Wageningen (NL)**

(72) Inventors:
- **Cohen Stuart, Martinus Abraham**
  **6705 BK, Wageningen (NL)**
- **Leermakers, Franciscus Adrianus Maria**
  **6708 LV, Wageningen (NL)**

(74) Representative: **Renkema, Jaap et al**
**Ipecunia B.V.**
**P.O. Box 593**
**6160 AN Geleen (NL)**

(54) **Triblock copolymer gelators**

(57) The invention relates to a composition comprising water, a triblock copolymer and polyionic component C, wherein the triblock copolymer is an ABA copolymer, having two charged blocks A and a water soluble neutral block B, and the polyionic component C has a charge opposite to the charge of block A of the copolymer. The invention also relates to the use of the composition in drug delivery (controlled release agents), rheology modifiers in for example coating formulations, food and cosmetics.

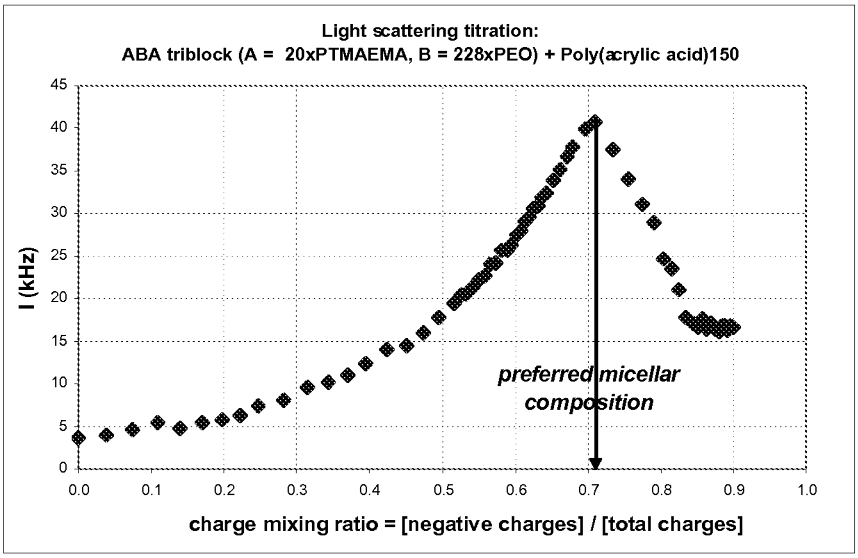


**Figure 1**: Intensity of scattered light of mixtures of the cationic ABA triblock copolymer of example 2 and anionic polymer polyacrylic acid (DP = 150), versus the mixing ratio.

EP 2 186 858 A1

## Description

The present invention relates to triblock copolymer gelators.

Triblock copolymers are known in the art. Langmuir 2004, 20, 4306-4309 for example discloses ABA type triblock copolymer gelators. The A block consists of a 2(diisopropylamino) ethylmethacrylate block, while the B-block is derived from 2-methacryloyloxyethyl phosphorylcholine. At low pH, the triblock copolymer is ionic. At pH above 4, the A block becomes hydrophobic and a micelle is being formed. Comparable systems are disclosed in for example Biomacromolecules 2003, 4, 864-868. Here a gel can be formed at amounts above 10w/v% around neutral pH.

M.A. Cohen Stuart made a review on diblock and triblock copolymers in "Current Opinion in Colloid & Interface Science 10(2005), 30-36". Triblock copolymers, having associative middle blocks, are disclosed, that can make flowerlike micelles, 3-dimensional networks, core shell corona micelles and the like. The formation of micellar or gel-like structure is highly dependent on conditions like pH, concentration and temperature. The triblock copolymers known in literature are associative thickeners, wherein the thickening action is based on hydrophobic interactions of the hydrophobic blocks of the copolymers. These hydrophobic interactions can be disturbed by interactions with other hydrophobic ingredients of a dispersion, like polymers, particles, fillers and the like. Application of these triblock copolymers is therefore limited.

US 2006-275337 discloses diblock copolymers used as complex coacervate core micelles as surface modification or surface treatment.

It is an object of the invention to provide water soluble systems showing gelation behavior, resulting in solutions having reversible viscoelastic properties. It is another object of the invention to provide gelators that avoid the hydrophobic interactions with fillers and other hydrophobic ingredients of a dispersion or with hydrophobic surfaces of containers and the like.

The di- and triblock copolymers of the state of the art also have a problem of difficulty to handle due to premature gelling under certain conditions.

The invention relates to a composition comprising water, a triblock copolymer and a polyionic component C, wherein the triblock copolymer is an ABA copolymer, having a charged block A and a water soluble neutral block B, and the polyionic component C has a charge opposite to the charge of block A of the copolymer.

Such a composition has a number of advantages. The properties of the composition can be tuned by additives, like for example salts, acids and bases. Furthermore the composition is a two component system, which provides freedom to tune the properties of the composition, without the need to make a new triblock copolymer or a polyionic component C.

Another advantage of the composition of the present invention is that a gelation or thickening effect will only occur upon mixing of the two components of the composition. This allows for easy preparing the single components, without all kinds of problems with premature gelling of the components.

### Detailed description of the invention.

The term "complex coacervation", as used herein, refers to the interaction of two macromolecules of opposite charge. In the literature coacervation addresses the separation of colloidal systems in liquid phases, wherein the phase more concentrated in hydrophilic colloid component is called the coacervate. The term "complex" indicates that the driving force for separation of colloids is of electrostatic origin.

In the present specification, the molecular weight of a polymer, copolymer, or block refers to the weight-average molecular weight of said polymer, copolymer, part or block. The weight-average molecular weight of the polymer or copolymer can be measured by gel permeation chromatography (GPC). In the present specification, the molecular weight of a block refers to the molecular weight calculated from the amounts of monomers, polymers, initiators and/or transfer agents used to make said block. The man skilled in the art knows how to calculate these molecular weights. The ratios by weight between blocks refer to the ratios between the amounts of the compounds used to make said parts or blocks, considering an extensive polymerization. Typically, the molecular weight M of a block: $M_{block}$, is calculated according to the following formula:

$$M = \sum_i M_i * \frac{n_i}{n_{precursor}}$$

, wherein $M_i$ is the molecular weight of a monomer i, $n_i$ is the number of moles of a monomer i, and $n_{precusor}$ is the number of moles of a compound the macromolecular chain of the block will be linked to. Said compound may be a transfer agent or a transfer group, or a previous block. If it is a previous block, the number of moles may be considered as the number of moles of a compound the macromolecular chain of said previous block has been linked to, for example

a transfer agent or a transfer group. It may be also obtained by a calculation from a measured value of the molecular weight of said previous block. If two blocks are simultaneously grown from a previous block, for example at ends, the molecular weight calculated according to the above formula should be divided by two.

The composition of the present invention is water based, which means that the components of the composition are dissolved or dispersed in water as the main solvent component. At least 50% of solvent of the composition is water, more preferably at least 60% of the solvent.

The composition comprises at least two components that carry opposite charges. The first component, being the triblock copolymer and the second component C are oppositely charged, meaning that one component exhibits an overall anionic character and the other component has an overall cationic character. The ionic properties can be accounted for by groups that are permanently charged or "quenched" in aqueous environment, such as e. g. sulfonate groups, or by chargeable or "annealed" groups which are dependent on pH, such as e.g. amines and carboxylated groups. From hereon, the term "chargeable", as used herein, refers to both permanently charged groups and chargeable groups. It can be also referred to "ionic" (charged) units, monomers, blocks, or polymers, or to "potentially ionic" (chargeable) units, monomers, blocks, or polymers. For the sake of simplification, in the present specification, "ionic" (responsibly anionic or cationic) refers to both ionic and potentially ionic (responsibly potentially anionic or potentially cationic), unless otherwise specified. In a preferred embodiment of the present invention, the ionic units of the polymers are permanently charged groups.

The first component is a triblock copolymer with two ionic blocks A comprising each independently at least 6, more preferably at least 10 ionic groups. Preferably the amount of ionic groups is less than 100, more preferably less than 50. The term "block polymer", as used herein, refers to polymers that are constructed from blocks of more than one monomer (or units deriving from monomer (s)). It does not comprise polymers with random distributions of more than one monomer. However a block can be itself a random distribution of units deriving from more than one monomer.

The block copolymers can be prepared from monomeric units by different polymerization methods, known to the skilled man. For example, polymerization can be performed using condensation reactions, radical polymerization, cationic polymerization or any other chain growth mechanism.

The first component according to the present invention is preferably an ABA block copolymer. The block copolymer may optionally contain other blocks or bridging groups between the A and B blocks, or at the end of an A-block, as long as the essential properties of the triblock polymer are not negatively influenced.

The term "ionic block", as used herein, is meant to include blocks of charged groups and chargeable groups. The block polymer can be overall cationically or anionically chargeable. The ionic block of the block polymer is preferably selected from the group consisting of poly-L-lysine or other poly (amino acids), polyacrylic acid (PAA), polymethacrylic acid (PMA), DNA-segments, poly (thiophene-3-acetic acid), poly (4- styrenesulfonic acid), poly (pyridinium acetylene), poly (ethylene imine), poly (vinylbenzyltriamethylamine), polyaniline, poly (alkylamine hydrochloride), poly- (dimethylamino ethylmethacrylate) (PAMA), polyaspartic acid, poly (N-alkyl-4-vinylpyridinium) (PVP), but it is not limited thereto. More preferably, the ionic block is selected from the group of polyacrylic acid (PAA), polymethacrylic acid (PMA), poly-(dimethylamino ethylmethacrylate) (PAMA) and poly (N-alkyl-4- vinylpyridinium) (PVP). The block can also be defined by the units it comprises and/or by the monomers the units derive from. Thus the ionic block can comprise anionic units or cationic units. Examples of cationic blocks are blocks comprising units deriving from cationic monomers such as: aminoalkyl (meth) acrylates; aminoalkyl (meth) acrylamides; monomers, including particularly (meth) acrylates, and (meth) acrylamides derivatives, comprising at least one secondary, tertiary or quaternary amine function, or a heterocyclic group containing a nitrogen atom, vinylamine or ethylenimine; diallyldialkyl ammonium salts - their mixtures, their salts, and macromonomers deriving there from. Examples of cationic monomers include: dimethylaminoethyl (meth) acrylate; dimethylaminopropyl (meth) acrylate; ditertiobutylaminoethyl (meth) acrylate; dimethylaminomethyl (meth) acrylamide; dimethylaminopropyl (meth) acrylamide; ethylenimine; vinylamine; 2-vinylpyridine; 4-vinylpyridine; trimethylammonium ethyl (meth) acrylate chloride; trimethylammonium ethyl (meth) acrylate methyl sulphate; dimethylammonium ethyl (meth) acrylate benzyl chloride; 4-benzoylbenzyl dimethylammonium ethyl acrylate chloride; trimethyl ammonium ethyl (meth) acrylamido (also called 2- (acryloxy) ethyltrimethylammonium, TMAEAMS) chloride; trimethylammonium ethyl (meth) acrylate (also called 2- (acryloxy) ethyltrimethylammonium, TMAEAMS); methyl sulphate; trimethyl ammonium propyl (meth) acrylamido chloride; vinylbenzyl trimethyl ammonium chloride; and diallyldimethyl ammonium chloride.

Examples of pH responsive cationic blocks are: poly (dimethylaminoethyl) methacrylate (PDMAEMA), poly methacrylic acid / polymethacrylate (PMA).

Examples of cationic blocks that are non responsive to pH are: poly (trimethylaminoethyl) methacrylate (PTMAEMA), polypotassium vinylsulfonate (PKVS).

Most preferred cationic blocks are blocks comprising units derived from at least one monomer selected from the group consisting of dimethylaminoethyl (meth) acrylate, dimethylaminopropyl (meth) acrylate, ditertiobutylaminoethyl (meth) acrylate, dimethylaminomethyl (meth) acrylamide, dimethylaminopropyl (meth) acrylamide, or blocks of poly (dimethylaminoethyl) methacrylate (PDMAEMA), poly (trimethylaminoethyl) methacrylate (PTMAEMA), or polypotassium vinylsulfonate (PKVS).

Examples of non-pH responsive anionic blocks are blocks comprising units derived from anionic monomers like monoalkylesters of alpha-ethylenically-unsaturated, preferably mono-alpha- ethylenically-unsaturated, dicarboxylic acids; alpha-ethylenically-unsaturated, preferably mono-alpha-ethylenically-unsaturated, compounds comprising a sulphonic acid group, and salts of alpha-ethylenically- unsaturated compounds comprising a sulphonic acid group.

Examples of pH responsive anionic blocks are blocks comprising units derived from anionic monomers like alpha-ethylenically-unsaturated, preferably mono-alpha-ethylenically-unsaturated, monomers comprising a phosphate or phosphonate group; alpha-ethylenically-unsaturated, preferably mono-alpha-ethylenically-unsaturated, monocarboxylic acids; monoalkylamides of alpha-ethylenically-unsaturated, preferably mono-alpha- ethylenically-unsaturated, dicarboxylic acids; acrylic acid, methacrylic acid.

Preferred anionic blocks include blocks comprising units deriving from at least one anionic monomer selected from the group consisting of: acrylic acid; methacrylic acid; vinyl sulphonic acid, salts of vinyl sulfonic acid; vinylbenzene sulphonic acid, salts of vinylbenzene sulphonic acid; alpha-acrylamidomethylpropanesulphonic acid, salts of alpha-acrylamidomethylpropanesulphonic acid; 2-sulphoethyl methacrylate, salts of 2-sulphoethyl methacrylate; acrylamido-2-methylpropanesulphonic acid (AMPS), salts of acrylamido-2- methylpropanesulphonic acid; and styrenesulfonate (SS).

The ionic blocks A can also comprise neutral hydrophilic units.

In a preferred embodiment of the invention, the triblock copolymer is a linear polymer and the blocks are end-to-end linked, optionally with a spacer or bridging group. If the copolymer is branched, the chargeable groups could also be grafted onto a hydrophilic and neutral backbone.

The triblock copolymer comprises at least a block B that is hydrophilic and neutral. In principle any hydrophilic and neutral block B can be employed, the only restrictions being that it is water-soluble and can be connected to the ionic block. The hydrophilic and neutral block B of the block polymer can be selected from the group comprising polyethylene glycol (PEG), polyglyceryl methacrylate (PGMA), polyvinylalcohol, polyacrylamide (PAM), polymethacrylamid. Other examples of neutral hydrophilic blocks B are blocks comprising units derived from neutral hydrophilic monomers, like for example: - ethylene oxide, - vinyl alcohol, - vinyl pyrrolidone, - acrylamide, methacrylamide, - polyethylene oxide (meth) acrylate (i. e. polyethoxylated (meth) acrylic acid), - hydroxyalkylesters of alpha-ethylenically-unsaturated, preferably mono-alpha- ethylenically-unsaturated, monocarboxylic acids, such as 2-hydroxyethylacrylate, and - hydroxyalkylamides of alpha-ethylenically-unsaturated, preferably mono-alpha-ethylenically-unsaturated, monocarboxylic acids.

In a preferred embodiment, the hydrophilic and neutral block B is chosen from polyethylene glycol (PEG), polyglyceryl methacrylate (PGMA), polyvinylalcohol, polyacrylamide (PAM), polymethacrylamid or a combination thereof.

The hydrophilic and neutral block B of the triblock copolymer preferably has a molecular weight between 2,500 and 100,000, more preferably between 5,000 and 50,000.

The component C is a polyionic compound, comprising at least 2 charges, more preferably at least 6, even more preferably at least 10 or 15 charges. Examples of component C are polymers (polyelectrolytes), salts containing multiple charges, polyionic surfactants, solid particles and materials of biological nature like proteins.

In a preferred embodiment of the invention the component C is a poly ionic polymer, hereinafter defined as polymer C.

The polymer C according to the invention can be for example a homopolymer, a random copolymer, a block polymer, a natural polymer, or a derivative thereof. In case the polymer C is a homopolymer, or a random copolymer it is a polyelectrolyte. If the polymer C is a block polymer, it comprises at least an ionic block. The polyelectrolyte or the ionic block can be either cationically or anionically chargeable, wherein it is charged oppositely to the ionic blocks A of the triblock copolymer. If the ionic blocks A of the triblock copolymer are a polycation, than the polymer C has an overall anionic character, and if the ionic blocks of the triblock copolymer are a polyanion, than the polymer C has an overall cationic character. If the polymer C is a random copolymer, it preferably comprises a combination of anionic units, or a combination of cationic units, or a combination of anionic units and neutral units, or a combination of cationic units and neutral units. The polymer C according to the invention can be a homopolymer or a random copolymer, a block polymer, a natural polymer, or a derivative thereof. It can be chosen from the same group of polyanions and polycations as the ionic block of the triblock copolymer, but is not limited to this list. In other words, the polymer C, or block thereof, can comprise units and/or derive from monomers, that have been listed above, provided that it is cationic where the triblock copolymer has an anionic block, or that it is anionic where the triblock copolymer has a cationic block. In principle, any ionic block can be used in the preparation of the complex coacervate gels according to the invention, the only restraint being that it is oppositely chargeable to the ionic block of the triblock copolymer. Most preferably, the polymer C is selected from the group consisting of polyacrylic acid (PAA), polymethacrylic acid (PMA), poly (dimethylamino ethylmethacrylate) (PAMA) and poly (N-alkyl-4-vinylpyridinium) (PVP). It can be also a homopolymer or a random copolymer comprising units deriving from the monomers listed above. In case the polymer C is a homopolymer, it preferably comprises at least 5, more preferably at least 10, and most preferably between 15 and 200 monomeric units. The homopolymer has a molecular weight of typically between 500-40,000, preferably between 1,000-20,000.

In case the polymer C is a block polymer, the ionic block preferably consists of at least 20, more preferably at least 40, and most preferably at least 50 monomeric units. The ionic block of the polymer C has a molecular weight of

preferably less than 100,000, more preferably less than 50,000, most preferably less than 25,000.

In case the polymer C is a block polymer, the second block can be a neutral block that is the same or different than the second block of the triblock copolymer. In principle any monomer can be applied, the only restrictions being that a block of these monomers is water-soluble, can be connected to the ionic block. Most preferably, the hydrophilic and neutral block is a polyethylene glycol, a polyglyceryl methacrylate or a polyacrylamide, or a combination thereof.

The blockcopolymers of the present invention can be prepared in different ways. For example blocks A and B can be directly coupled together, wherein block B has functional groups at both ends of the molecule that can react with a functional group at the end of each A block. This can be done with for example click-chemistry.

A preferred way of making the ABA triblock polymers according to the invention is to start with the middle B-block, which contains two functional groups at both ends of the molecule. From both ends the two blocks A are polymerised from with controlled chain growth chemistry, like for example controlled radical polymerization, anionic or cationic polymerization and the like. Alternatively it is also possible to start with a bifunctional molecule (like for example a bisphenol A) or bifunctional initiator, start making block B with a controlled chain growth mechanism, followed by a controlled chain growth of the two A blocks.

The compositions of the present invention can have numerous applications, for example as thickeners. Other examples of applications are: drug delivery (controlled release agents), rheology modifiers in for example coating formulations, food, cosmetics and the like.

Examples

Experiment 1. Preparation of polyethylene oxide based bifunctional macroin itator

30.0 grams of hydroxy-terminated polyethylene oxide (PEO) of nominal molecular weight 10,000 g/mol (FLUKA), was dissolved in 290.5 grams toluene. 100 ml of the solvent was removed through azeotropic distillation under ambient pressure and temperature of 155 deg C. The solution was brought to 30 deg C and 3 ml of triethylamine was added. 3 ml of 2-bromoisobutyryl bromide was added drop wise over 30 minutes to the mixture under constant stirring. The reaction was left to take place for 7 days at 30 deg C. The dark brown mixture was treated with 30 grams of decolorizing charcoal. After removal of the charcoal by filtration, the polymer was precipitated into a 10-fold excess of petroleum ether. The pale yellow powder was now dissolved in absolute ethanol, and recrystalized at 4 deg C. The filtered product (white powder) was again dissolved in tetrahydrofuran and precipitated in a 5-fold excess of petroleum ether (repeat once). The remaining solvent was removed from the final product under reduced pressure at ambient temperature. Yield: 27.8 gram = 93 wt%, Degree of conversion ($^1$H NMR) > 95%, Structure of the product is:

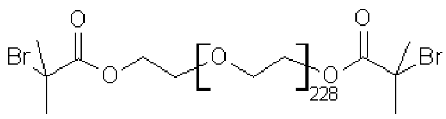

Example 2. Preparation of an ABA triblock polymer

Preparation of $A_n$-$B_m$-$A_n$ triblock copolymer, where B = polyethylene oxide of 10,000 g/mol (i.e. 228 repeat units) according to experiment 1 and polytrimethylamino ethylmethacrylate (PTMAEMA) with a chloride counterion. 7.5 grams of the macroinitiator prepared in example 1, 0.30 grams of 2,2-dipyridyl and 8,76 grams of a 75 wt% aqueous solution of the monomer (trimethylamino ethylmethacrylate) with chloride counterions are dissolved in a mixture of 15.0 grams of isopropanol and 15.0 grams of demineralized water.

The mixture is degassed by bubbling with $N_2$ while stirring for 45 mins. The mixture is subsequently brought to a temperature of 40 deg C, placed under reflux and kept under a $N_2$ atmosphere. 0.075 grams of Cu(I)Cl is added under nitrogen overpressure. Reaction is proceeded for 2.5h at 40 deg C. The reaction in the dark brown liquid is stopped by exposing the mixture to oxygen, turning the reaction mixture blue. The mixture is diluted with 50ml of demineralized water. Purification of the product is performed by dialysis (in 1,000 g/mol cut-off dialysis tubing) against demineralized water. The product (a white powder) is obtained through freeze drying. Yield: 11.7 grams = 83 wt%, $^1$H NMR on the $A_n$-$B_m$-$A_n$ block copolymer showed that n = 20 with m = 228 (from the supplier). The structure of the product is:

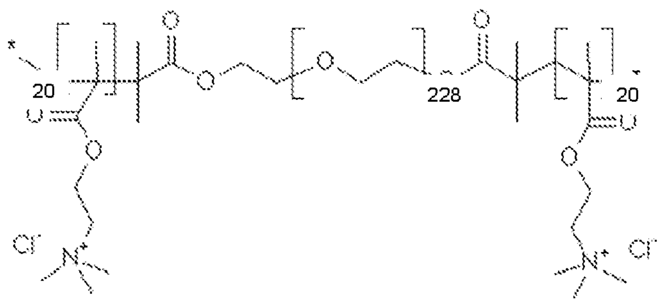

Example 3. Test of the association properties of the synthesized triblock copolymer in example 2 with polyacrylic acid.

10ml of a 1 gram/liter solution of the cationic ABA polymer of example 2 in water was placed in a glass cell, that was placed in a light scattering set-up. With a computerized titration set-up, a 2 gram/liter of the anionic polymer polyacrylic acid (PAA) with a degree of polymerization of 150, was added stepwise to the solution in the cell. When the intensity of the light scattered by the polymer solution is plotted versus the charge stoichiometry (Figure 1), expressed as the ratio of the number of negative charges over the total number of charged groups in the system, we see that around 0.7 there is a large increase in scattered intensity, which is indicative of the formation of micelles, as is well established in literature. For the system investigated here we find a hydrodynamic radius for the micelles of 17nm, again in correspondence to what is described in literature for similar systems of diblock copolymers. The position of the peak in scattered intensity, known as the preferred micellar composition, represents the mixing ratio of the two components where the associative interactions are at a maximum. This experiment confirms that association between the cationic triblock copolymer and the anionic homopolymer takes place as expected.

Example 4. Formation of hydrogels from the ABA triblock copolymer from example 2 and polyacrylic acid (DP = 150).

Stock solutions of 100 gram/liter of the ABA triblock copolymer of example 2 and 100 gram/liter polyacrylic acid (degree of polymerization = 150) are mixed to yield a solution in which the charge mixing ratio is equal to 0.7, corresponding to the preferred micellar composition described in example 3. The charge mixing ratio is defined here as the number of negative charges (from the PAA) divided by the total number of charged groups (from the ABA triblock + the PAA). For an overall polymer concentration of 100 grams/liter, the mixtures instantly forms a hydrogel (90 wt% water) that can support its own weight (see left vial in figure 2). Upon diluting with water to give a polymer concentration of 10 g/L the mixtures again becomes liquid like (right vial in figure 2). This experiment confirms that at high enough concentrations, the association of the ABA triblock and an oppositely charged polyelectrolyte, leads to the formation of a hydrogel with significantly increased viscosity.

## Claims

1. A composition comprising water, a triblock copolymer and polyionic component C, wherein the triblock copolymer comprises an ABA composition, having two charged blocks A and a water soluble neutral block B, and the polyionic component C has a charge opposite to the charge of block A of the copolymer.

2. The composition according to claim 1, wherein each charged block A comprises independently from 6 to 100 ionic groups.

3. The composition according to claim 1, wherein each charged block A comprises independently from 10 to 50 ionic groups.

4. The composition according to anyone of claims 1-3, wherein the A block is a cationic block, chosen from the group consisting of dimethylaminoethyl (meth) acrylate, dimethylaminopropyl (meth) acrylate, ditertiobutylaminoethyl (meth) acrylate, dimethylaminomethyl (meth) acrylamide, dimethylaminopropyl (meth) acrylamide, or blocks of poly (dimethylaminoethyl) methacrylate (PDMAEMA), poly(trimethylaminoethyl) methacrylate (PTMAEMA), or polypotassium vinylsulfonate (PKVS).

**5.** The composition according to anyone of claims 1-3, wherein the A block is an anionic block, chosen from the group consisting of blocks comprising units deriving from at least one anionic monomer selected from acrylic acid; methacrylic acid; vinyl sulphonic acid, salts of vinyl sulfonic acid; vinylbenzene sulphonic acid, salts of vinylbenzene sulphonic acid; alpha-acrylamidomethylpropanesulphonic acid, salts of alpha-acrylamidomethylpropanesulphonic acid; 2-sulphoethyl methacrylate, salts of 2-sulphoethyl methacrylate; acrylamido-2-methylpropanesulphonic acid (AMPS), salts of acrylamido-2-methylpropanesulphonic acid; and styrenesulfonate (SS).

**6.** The composition according to anyone of the preceding claims, wherein block B is chosen from polyethylene glycol (PEG), polyglyceryl methacrylate (PGMA), polyvinylalcohol, polyacrylamide (PAM), polymethacrylamid.

**7.** The composition according to anyone of the preceding claims, wherein block B has an average molecular weight between 2,500 and 100,000.

**8.** The composition according to anyone of the preceding claims, wherein block B has an average molecular weight between 5,000 and 50,000

**9.** The composition according to anyone of the preceding claims, wherein component C comprises at least 6 charges.

**10.** The composition according to anyone of the preceding claims, wherein component C is a polyelectrolyte.

**11.** The composition according to claim 10, wherein component C is selected from the group consisting of polyacrylic acid (PAA), polymethacrylic acid (PMA), poly (dimethylamino ethylmethacrylate) (PAMA) and poly (N-alkyl-4-vinylpyridinium) (PVP).

**12.** The composition according to claim 10 or 11, wherein component C is a homopolymer, having a molecular weight of between 1,000-20,000.

**13.** Use of the composition according to anyone of the preceding claims in drug delivery (controlled release agents), rheology modifiers in for example coating formulations, food, cosmetics.

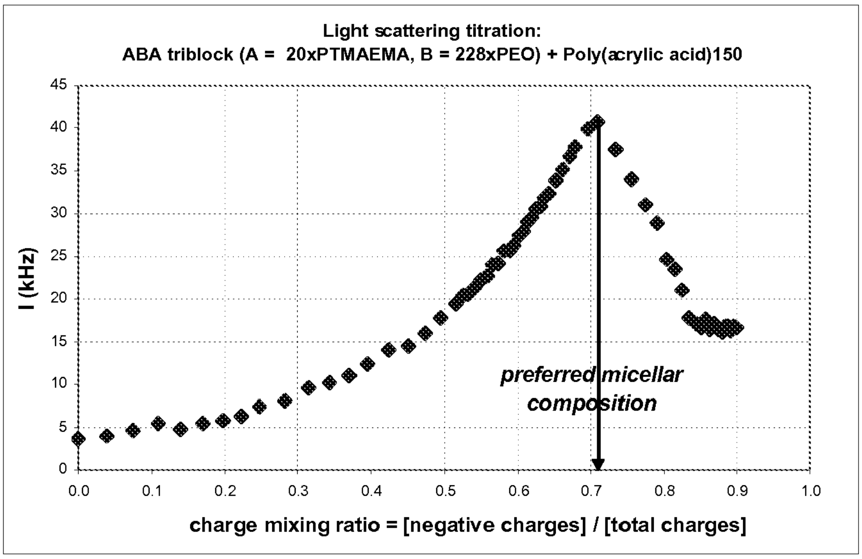


**Figure 1**: Intensity of scattered light of mixtures of the cationic ABA triblock copolymer of example 2 and anionic polymer polyacrylic acid (DP = 150), versus the mixing ratio.

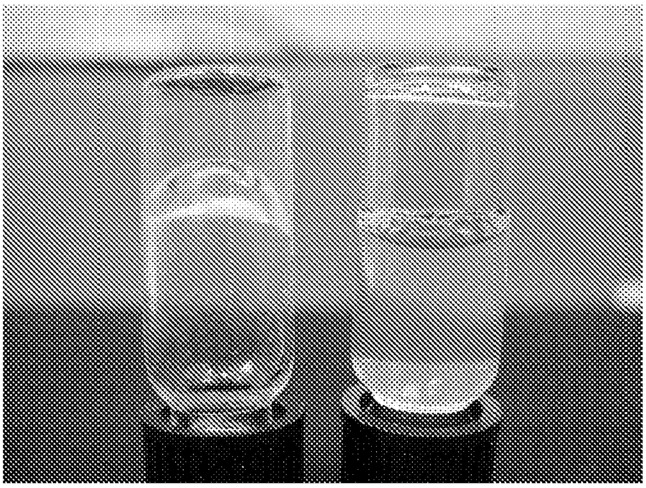

**Figure 2**

Europäisches Patentamt
European Patent Office
Office européen des brevets

# EUROPEAN SEARCH REPORT

Application Number
EP 08 16 8843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 780 419 A (HOLLAND BIOMATERIALS GROUP B V [NL]) 25 June 1997 (1997-06-25)<br>* example 8 *<br>----- | 1-13 | INV.<br>C08L53/00 |
| D,A | COHEN STUART ET AL: "Assembly of polyelectrolyte-containing block copolymers in aqueous media"<br>CURRENT OPINION IN COLLOID AND INTERFACE SCIENCE, LONDON, GB,<br>vol. 10, no. 1-2,<br>1 August 2005 (2005-08-01), pages 30-36, XP005024061<br>ISSN: 1359-0294<br>* the whole document *<br>----- | 1-13 | |
| D,A | YINGHUA MA, YIQING TANG, NORMAN C. BILLINGHAM, STEVEN P. ARMES, ANDREW L. LEWIS: "Synthesis of Biocompatible, Stimuli-Responsive, Physical Gels Based on ABA Triblock Copolymers"<br>BIOMACROMOLECULES,<br>vol. 4, no. 4, 26 June 2003 (2003-06-26), pages 864-868, XP002511584<br>American Chemical Society<br>* the whole document *<br>----- | 1-13 | TECHNICAL FIELDS SEARCHED (IPC)<br>C08F<br>C08L<br>B01J |
| A | EP 1 518 568 A (WAGENINGEN UNIVERSITEIT [NL]; RHONE POULENC CHIMIE [FR])<br>30 March 2005 (2005-03-30)<br>* the whole document *<br>----- | 1-13 | |

The present search report has been drawn up for all claims

| Place of search | Date of completion of the search | Examiner |
|---|---|---|
| Munich | 22 January 2009 | Madalinski, Maciej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 08 16 8843

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2009

| Patent document cited in search report | Publication date | Patent family member(s) | Publication date |
|---|---|---|---|
| EP 0780419 A | 25-06-1997 | CA 2193562 A1 | 23-06-1997 |
| EP 1518568 A | 30-03-2005 | WO 2005030282 A1 | 07-04-2005 |
| | | JP 2007506826 T | 22-03-2007 |
| | | US 2006275337 A1 | 07-12-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006275337 A


### Non-patent literature cited in the description


- *Langmuir,* 2004, vol. 20, 4306-4309
- *Biomacromolecules,* 2003, vol. 4, 864-868
- **M.A. Cohen.** Stuart made a review on diblock and triblock copolymers. *Current Opinion in Colloid & Interface Science,* 2005, vol. 10, 30-36